# EUROPÄISCHE PATENTSCHRIFT

(11) **EP 2 640 987 B1**
(45) Veröffentlichungstag und Bekanntmachung des Hinweises auf die Patenterteilung: **25.02.2015**
(21) Anmeldenummer: 11779693.8
(22) Anmeldetag: 10.11.2011
(51) Int. Cl.: F16C 33/04, G01M 13/04

(54) **PRÜFVERFAHREN ZUR BESTIMMUNG DER SCHMUTZVERTRÄGLICHKEIT VON GLEITLAGERN UND GLEITLAGERWERKSTOFFEN**
TEST METHOD FOR DETERMINING THE DIRT TOLERANCE OF SLIDING BEARINGS AND SLIDING-BEARING MATERIALS
PROCÉDÉ DE TEST POUR DÉTERMINER LA TOLÉRANCE AUX SOUILLURES DE PALIERS LISSES ET DE MATÉRIAUX POUR PALIERS LISSES

(30) Priorität: 17.11.2010 DE 102010044056
(43) Veröffentlichungstag der Anmeldung: 25.09.2013
(73) Patentinhaber: Federal-Mogul Wiesbaden GmbH, 65201 Wiesbaden (DE)
(72) Erfinder: BRESSER, Karsten, 65375 Oestrich-Winkel (DE); WALDSCHMIDT, Michael, 65375 Oestrich (DE); AUBELE, Thomas, 55278 Undenheim (DE); WILHELM, Maik, 55270 Ober-Olm (DE)
(74) Vertreter: Hoffmann Eitle
(86) Internationale Anmeldenummer: PCT/EP2011/069830
(87) Internationale Veröffentlichungsnummer: WO 2012/065900

(56) Entgegenhaltungen:
- EP-A1- 0 250 652
- US-A1- 2007 123 152
- US-B1- 6 517 954

## Beschreibung

### Technisches Gebiet

Die Erfindung betrifft ein Verfahren zur Bestimmung der Schmutzverträglichkeit von Gleitlagern und eine Vorrichtung, die für ein solches Verfahren vorgesehen ist.

Es ist allgemein bekannt, dass Gleitlager insbesondere in Motoren von Kraftfahrzeugen einem hohen Verschleiß unterliegen. Hierbei tritt insbesondere das Problem auf, dass Schmutzpartikel in den Schmierspalt zwischen Gleitlager und Gegenläufer eintreten. Aufgrund der Bewegung dieser beiden Objekte zueinander furchen sich die Schmutzpartikel in das Gleitlager ein und verdrängen somit beim Eindringen in das Metallgefüge Materialanteile, welche folglich als Aufwurf beidseitig der Partikelspur zu einer Erhöhung und Wulstbildung über das funktionale Flächenniveau hinaus führen. Hierbei ist die Materialzusammensetzung und Höhe dieses Materialaufwurfs, neben anderen Einflussfaktoren, direkt von der Größe der Partikel und auch der jeweiligen Härte der Partikel, des Lagerwerkstoffs und der Gleitschicht abhängig.

Dieser Materialaufwurf führt wiederum zu einem Reibkontakt zwischen dem aufgeworfenen Gleitlagermaterial und einem von dem Gleitlager gelagerten Gegenläufer, z.B. einer Welle. Außerdem ist an dieser Stelle die Hydrodynamik des Schmiermittels gestört, was dazu führt, dass es lokal im Bereich des Materialaufwurfs zu einem Mischreibungskontakt mit einem hohen Grad an Energieumsetzung kommt. Das Partikel selbst furcht sich in das Lagermaterial bis zu seinem Stillstand ein und wird entsprechend seiner Größe mehr oder weniger tief in das Lagermetall eingebettet. Insbesondere überragen große Partikel sowohl die funktionale Gleitebene des Gleitlagers als auch den Materialaufwurf infolge der Einbettung. Dies führt zu einem intensiven Mischreibungskontakt zwischen dem Partikel und dem Gegenläufer mit einer folgenden Verschlechterung der Oberflächengüte der Welle, einsetzendem abrasiven Verschleiß des Gleitlagers und den weiteren dadurch resultierenden Folgeschäden bis hin zur Adhäsion des Gleitlagers und des Gegenläufers und somit dem Totalausfall des Gleitlagers.

Ein weiterer Gesichtspunkt des Verschleißverhaltens ist, dass die Eliminierung von Blei in den Legierungen der Gleitlagerwerkstoffe, die in einer EU-Richtlinie vorgeschrieben wurde, das Verhalten der Gleitlager bezüglich der Einbettung von Primär- und Sekundärschmutz und in der Folge die Funktions- und Betriebssicherheit stark verändert hat. Die Unterschiede in dem Einbettverhalten zwischen den bisherigen bleihaltigen Lagerwerkstoffen und den heutigen bleifreien Lagerwerkstoffen basieren auf der Struktur der Werkstoffe. So haben bleihaltige Gleitlagerwerkstoffe, insbesondere Werkstoffe auf Kupferbasis, meist ein heterogenes Gefüge, in dem das chemische Element Blei in dendritischer Form in eine Kupfermatrix eingebettet ist. Neue bleifreie Gleitlagerwerkstoffe hingegen sind meist homogen ohne parallel vorliegende Legierungselemente aufgebaut. Der beschriebene Materialaufwurf besteht bei den bleihaltigen Lagerwerkstoffen zu einem großen Anteil aus Blei, bei den bleifreien Werkstoffen hingegen aus einer homogenen Kupferlegierung. Da die Schmierwirkung des als Trockenschmierstoff bekannten Bleis bei den bleifreien Lagermetallen nicht vorhanden ist, sind die Reibungskontakte und die folgende Energieumsetzung dementsprechend intensiver und stärker.

Die EP 0 250 652 A1 beschreibt ein Lager, in das in einem Testverfahren Schmutz eingebracht wurde, um reale Betriebszustände zu simulieren. Anschließend wurde die Abnutzung des Lagers beurteilt. Die US 2007/123152 A1 und die US 6,517,954 B1 sind weiterer Stand der Technik.

### Stand der Technik

Aufgrund der Bedeutung der sich durch das Eindringen von Schmutzpartikeln ergebenden Beschädigungen der Gleitlager und der Gegenläufer ist es wichtig, ein Prüfverfahren für verschiedene Gleitlagerwerkstoffe zur vergleichenden Vorhersage der Sensibilität gegen Schmutzpartikel verschiedener Arten und Mengen zu haben. Bisherige Verfahren zielten darauf ab, Schmutzpartikel verschiedener Art, Menge und Größe über den Schmiermittelstrom in das Gleitlager zu transportieren. Dabei werden meistens die Schmutzpartikel in Emulsion gehalten oder in der Schmierölzuführbohrung vor dem Prüfverfahren mittels Fließfett positioniert. Die Partikel werden bei einem definierten Betriebspunkt über die Zuführeinheit durch Umschaltung eines Bypasses in die Lagerstelle eingespült oder zeitlich undefiniert über das Auflösen des Fließfetts im Ölstrom freigesetzt. Ein Nachteil dieser Verfahren ist die dem Zufall überlassene Beschädigung des Gleitlagers durch die Partikel, da die Winkelauflösung des Eindringens der Partikel in den Schmierspalt unbekannt ist und auch die Verteilung der Partikel innerhalb des Gleitlagers vor Beginn des Verfahrens nicht genau festgelegt werden kann. Dies hat zur Folge, dass die Aussagekraft der bisherigen Verfahren nur begrenzt ist.

### Darstellung der Erfindung

Der Erfindung liegt die Aufgabe zugrunde, ein Verfahren zur Bestimmung der Schmutzverträglichkeit von Gleitlagern und Gleitlagerwerkstoffen zu schaffen, welches die Aussagekraft der Prüfergebnisse erhöht.

Die Lösung dieser Aufgabe erfolgt durch das in Patentanspruch 1 beschriebene Verfahren.

Demzufolge beruht das Verfahren darauf, dass zumindest eine Furche, wie sie z. B. bei Gebrauch durch die Einwirkung von Partikeln auf Gleitlager oder Gleitlagerwerkstoffe entsteht, an einer definierten Stelle ausgebildet und nachfolgend das Verhalten des Lagers oder Werkstoffs unter Belastung geprüft wird. Dies hat den Vorteil, dass die Schädigung reproduzierbar hergestellt wird, wobei die Furche an einer definierten Position ausgebildet werden kann. Insbesondere kann die Furche an einer kritischen axialen und/oder Winkellage im Gleitlager positioniert werden. Die Schädigung kann punktuell oder umlaufend, durch eine einzige oder mehrere Furchen sowie flächig erfolgen. Dieses Verfahren ist deutlich aussagekräftiger als die Verfahren gemäß dem Stand der Technik, da es nunmehr ermöglicht wird, Beschädigungen der Gleitlager oder Gleitlagerwerkstoffe, wie sie im realen Gebrauch auftreten, nachzubilden. Auch wenn dieses Verfahren nicht die Energieumsetzung im Moment des Einfurchens berücksichtigt, stellt es definierte Zustände für eine lokale Mischreibung bereit. Hierbei ist eine Furche als eine im Wesentlichen linienförmige Vertiefung im Material anzusehen, die an ihren Rändern Materialaufwürfe aufweist, die über das normale Materialniveau herausragen.

Auch ist es ein Vorteil, dass diese Präparation realitätsnäher sein kann. Im Motor ist der Zeitpunkt, an dem der Fremdkörper auf die Gleitlagerfunktionsfläche tritt, willkürlich. Es ist anzunehmen, dass der größte Schaden dann angerichtet wird, wenn das Partikel auf einen hoch belasteten Teil des Lagers trifft. Um die gefährdeten Bereiche und Übergangsbereiche zu detektieren erfolgt somit die Präparation an unterschiedlichen Positionen des Lagers. Auch die Anzahl der Fremdkörper ist eine Unbekannte, weshalb bei der Präparation auch die Anzahl der geschädigten Bereiche variieren kann.

Bevorzugte Ausführungsformen sind in den abhängigen Patentansprüchen 2 bis 9 beschrieben.

Unter anderem hat es sich als vorteilhaft erwiesen, dass zumindest eine Furche mit zumindest einem eingebetteten Partikel ausgebildet wird. Dies hat den Vorteil, dass die somit entstandene Furche realitätsnäher ist, da bei Gebrauch eines Gleitlagers oftmals die Furchen verursachenden Partikel in diese eingebettet sind. Daher entspricht das Verfahren nach dieser bevorzugten Ausführungsform in höherem Maße der Realität und ist somit für Anwendungen aussagekräftiger. Ferner kann hierbei ein Vergleich zwischen Furchen mit und ohne eingebettete Fremdkörper erzielt werden. Deshalb ist durch diese Ausführungsform auch die Frage beantwortbar, ob die erhöhten lokalen Mischreibungsanteile oder aber die Schädigung des Gleitlagers und des Gegenläufers durch den Fremdkörper zu seinem Ausfall führen. Mehrere Furchen mit und ohne eingebettete Partikel können miteinander kombiniert werden.

Es ist außerdem vorteilhaft, wenn die Bemessung der Furche, insbesondere Länge, Breite und/oder Querschnitt, und/oder Form, Größe, Anzahl, Gewicht und/oder Härte des oder der Partikel definiert sind. Aufgrund der genannten Parameter kann das Verfahren gut an die jeweilige Anwendung z. B. im Bereich der Automobilindustrie angepasst werden. Da die Furchen entsprechend der Furchen eines Gleitlagers, das in der Anwendung, z.B. einem Verbrennungsmotor, benutzt wird, ausgebildet sind, ergibt sich eine hohe Aussagekraft der dadurch erhaltenen Daten. Auch ist es vorteilhaft, die Form, Größe, Anzahl, Gewicht und/oder Härte der Partikel zu definieren da dies den Vorteil hat, dass auch hiermit das Verhalten des Gleitlagers für viele verschiedene Werkstoffe, insbesondere aber für diejenigen Werkstoffe und diejenigen Partikel, die industriell relevant sind, getestet werden kann.

Eine weitere bevorzugte Ausführungsform besteht darin, dass auch der Gegenläufer des Gleitlagers, bevorzugt eine Welle, vorher so präpariert wird, dass er beschädigt ist. Auch diese Ausführungsform führt zu einer erhöhten Realitätsnähe des Verfahrens da in einem Gleitlager allgemein nicht nur das Gleitlager, sondern auch der Gegenläufer aufgrund des Einwirkens von Partikeln beschädigt wird. Es wird ferner bevorzugt, eine Welle als Gegenläufer zu benutzen, weil dies als Vorteil mit sich bringt, dass gerade auch Wellen, die in Gleitlagern gelagert werden, Beschädigungen aufweisen können und eine Untersuchung der Beschädigungen an Wellen insofern eine hohe industrielle Relevanz hat. Dies ist insbesondere der Fall bei Anwendungen wie z. B. Gleitlagern im Automobilbereich, insbesondere in Verbrennungsmotoren und deren Kolben. Zusätzlich hat die Präparation einer vorbeschädigten Welle den Vorteil, dass umlaufende Schädigungen an der Lagerfunktionsfläche und/oder der Welle simuliert werden können und man somit auch die Folgeschädigung infolge des Durchziehens der Fremdkörper durch die rotierende Welle nachstellen kann.

Ferner ist es vorteilhaft, wenn die Einbettung des Partikels kraft- und/oder weggeregelt erfolgt, wobei die Wegregelung durch einen Anschlag erfolgen kann. Dies hat den Vorteil, dass die Einbettung des Fremdkörpers definiert erfolgt, wodurch eine Reproduzierbarkeit der Ergebnisse gewährleistet ist. Die Tiefe und die angrenzende Schädigung des Lagerwerkstoffs durch den Fremdkörper hängen stark von den Werkstoffeigenschaften der Gleitschichten (wie z. B. Aluminiumlegierung, Galvanik-, Sputter- und Polymerschicht etc.) ab. Besonders die Härte bzw. das Härtegefälle zwischen dem Gleitlagermaterial und dem Partikel haben einen wichtigen Einfluss auf dessen Einbetttiefe. Um diesen Effekt zu simulieren bietet es sich an, einen kraftgeregelten Aufbau zu verwenden. Ferner ist es, um auch die Schädigung der Welle zu simulieren, sinnvoll, auch die herausragende Höhe des Fremdkörpers aus dem Lagermetall zu kontrollieren. Dies erreicht man am besten über eine Kraft- oder Wegregelung oder einen Anschlag, wobei sich letzterer durch eine einfache Bauweise auszeichnet. Hierbei ist der wichtigste Punkt der, dass die Höhe, bis zu welcher der Partikel herausragt, definiert ist. Diese kann variiert werden, um kritische Zustände festzustellen.

Weiterhin wird bevorzugt, dass als Partikel Späne aus Kupfer, Aluminium, und Stahl, Korund z.B. von Schleifscheiben, Strahlgut von der Komponentenreinigung, Gussformensand, Gussgrate oder Schmutz aus Wartungsarbeiten wie z. B. Ölwechsel benutzt werden. Diese Materialien kommen sämtlich bei der Fertigung von Automobilkomponten oder bei der Benutzung von Kraftfahrzeugen vor und versprechen somit eine hohe Realitätsnähe der Ergebnisse. Wichtig ist hierbei allerdings, dass die jeweils eingesetzten Fremdpartikel in Form, Größe, Anzahl, Gewicht und Härte definiert sind.

Es hat sich als vorteilhaft herausgestellt, dass die verbleibende Überstandshöhe eines eingebetteten Partikels im Vergleich zur funktionalen Gleitebene des Gleitlagers kontrolliert und geregelt wird. Hierdurch ergibt sich der Vorteil, dass das harte Partikel auch eine fortschreitende Oberflächenschädigung auf dem Gegenläufer verursacht. Die Kombination aus dem Profilieren der Schmutzriefe zur Erzeugung lokaler Mischreibungskontakte und der gezielten Einbettung der Schmutzpartikel kann den Schädigungsprozess in der Anwendung gut abbilden.

Eine weitere bevorzugte Ausführungsform besteht darin, dass die Präparation durch Rollieren, Prägen, Einwirken mit einem Laser, Kratzen, Fräsen, Drehen, Pressen, Stanzen und/oder Eindrücken von Objekten erfolgt. Hierbei ergibt sich der Vorteil, dass eine Schädigung punktuell umlaufend oder flächig erfolgen und in Anzahl und Größe variieren kann. Dadurch können Position und Form der Schädigungen durch das beschriebene Verfahren leicht und reproduzierbar präpariert werden. Insbesondere ist hierbei wichtig, dass die Ausführung der Schädigung ähnlich den Schädigungen in der Anwendung sein sollte, wobei von diesen jedoch abgewichen werden kann.

Schließlich wird bevorzugt, dass das Eindrücken mit einer Kugel und/oder einem Kegel in einem Härteprüfgerät unter einer definierten Kraft und/oder als umlaufendes Eindrücken einer rotierenden oder stehenden Scheibe erfolgt. Dies hat als Vorteil, dass hierbei die hauptsächlichen Ausfallursachen der Lagerstellen durch Beschädigung, nämlich lokal erhöhte Mischreibungsanteile mit sehr hoher Energiedissipation, die zum Aufschmelzen des Lagermetalls und sich daran anschließendem Ausfall der Lagerstelle führen, definiert konstant gehalten werden können. Dies kann z. B. durch das Eindrücken einer Kugel oder eines Kegels z. B. in einem Härteprüfgerät unter einer definierten Kraft oder durch das umlaufende Eindrücken einer rotierenden oder stehenden Scheibe erreicht werden. Insbesondere sind Härteprüfgeräte für das Aufbringen einer definierten Kraft sehr gut geeignet da sie im Allgemeinen für eine solche Art von Kraftaufbringung vorgesehen sind.

Es können alle Arten von Schmutzpartikeln eingebettet werden. Die Größe der Furchen (Länge, Breite, Querschnitte) können ebenso wie ihre Positionen, sowohl axial als auch in der Winkellage, entsprechend den real im Motorbetrieb auftretenden Riefen gestaltet werden. In einem zweiten Modus kann zusätzlich ein Schmutzpartikel am Ende einer Riefe in die Gleitschicht eingebettet werden. Auch diese Schädigung kann örtlich wie auch von der Größe her definiert dargestellt werden.

Weiterhin ist eine Lösung der genannten Aufgabe die in Anspruch 10 beschriebene Vorrichtung, die für das Durchführen eines Verfahrens nach einem der Ansprüche 1 bis 9 geeignet ist. Diese Vorrichtung vereint in sich die bereits genannten Vorteile und kann eines oder mehrere der o.g. Vorrichtungsmerkmale, wie z.B. einen Kraft- oder Wegregler für das Einbetten von Partikeln, eine Einrichtung zum Rollieren, Prägen, Einwirken mit einem Laser, Kratzen, Fräsen, Drehen, Pressen, Stanzen und/oder Eindrücken von Objekten, ein Härteprüfgerät mit einer Kugel und/oder einem Kegel, eine rotierende oder stehende Scheibe und ein geeignetes Prüfgerät aufweisen.

Die Vorrichtung weist insbesondere eine Einrichtung zum Prüfen der Gleitlager und/oder Gleitlagerwerkstoffe unter Belastung auf. Das Lager lagert eine Welle, die unter Belastung in dem Lager gedreht wird, wodurch die Benutzung im Kfz-Bereich simuliert werden kann. Hierbei können als Lager die typischen Lagerhalbschalen eingesetzt werden. Ferner weist die Vorrichtung eine Einrichtung zum Beurteilen der Beschädigung des Lagers wie zum Beispiel ein Mikroskop oder eine andere Einrichtung, mit der die Oberfläche des Gleitlagers und/oder Gleitlagerwerkstoffs optisch oder auf andere Weise geprüft werden kann, auf.

## Patentansprüche

1. Verfahren zur Bestimmung der Schmutzverträglichkeit von Gleitlagern oder Gleitlagerwerkstoffen, bei dem zumindest eine Furche, wie sie bei Gebrauch durch die Einwirkung von Partikeln entsteht, an einer definierten Stelle ausgebildet wird, so dass eine Schädigung reproduzierbar hergestellt wird, im Gegensatz zu einer dem Zufall überlassenen Beschädigung des Gleitlagers durch Partikel, und nachfolgend das Verhalten des Lagers oder Werkstoffs unter Belastung geprüft wird.

2. Verfahren nach Anspruch 1, bei dem zumindest eine Furche mit zumindest einem eingebetteten Partikel ausgebildet wird.

3. Verfahren nach Anspruch 1 oder 2, bei dem ferner die Bemessung der Furche, insbesondere Länge, Breite und/oder Querschnitt, und/oder die Form, Größe, Anzahl, Gewicht und/oder Härte des Partikels definiert ist.

4. Verfahren nach einem der vorherigen Ansprüche, wobei auch der Gegenläufer des Gleitlagers, bevorzugt eine Welle, vor der Prüfung so präpariert wird, dass er beschädigt ist.

5. Verfahren nach einem der Ansprüche 2 bis 4, wobei das Einbetten des Partikels kraft- und/oder weggeregelt erfolgt, wobei die Wegregelung bevorzugt über einen Anschlag erfolgt.

6. Verfahren nach einem der Ansprüche 2 bis 5, wobei die Partikel Stahl-, Kupfer-, Aluminiumspäne, Korund, Strahlgut von der Komponentenreinigung, Gussformensand, Gussgrate oder Schmutz aus Wartungsarbeiten wie z.B. Ölwechsel aufweisen.

7. Verfahren nach einem der Ansprüche 2 bis 6, wobei die verbleibende Überstandshöhe eines eingebetteten Partikels im Vergleich zur funktionalen Gleitebene des Gleitlagers kontrolliert und gesteuert wird.

8. Verfahren nach einem der vorherigen Ansprüche, wobei die Präparation durch Rollieren, Prägen, Einwirken mit einem Laser, Kratzen, Fräsen, Drehen, Pressen, Stanzen und/oder Eindrücken von Objekten erfolgt.

9. Verfahren nach Anspruch 8, wobei das Eindrücken mit einer Kugel und/oder einem Kegel in einem Härteprüfgerät unter einer definierten Kraft und/oder als umlaufendes Eindrücken einer rotierenden oder stehenden Scheibe erfolgt.

10. Vorrichtung, die für das Durchführen eines Verfahrens nach einem der vorherigen Ansprüche geeignet ist mit:
- einer Einrichtung zum Prüfen der Gleitlager und/oder Gleitlagerwerkstoffe unter Belastung, wobei das Lager eine Welle lagert, die unter Belastung in dem Lager gedreht werden kann und
- einer Einrichtung zur Präparation von in Position und Form reproduzierbaren Schädigungen.

## Claims

1. Method for determining the dirt compatibility of plain bearings or plain bearing materials, in which at least one groove such as arises in use due to the action of particles is formed at a given point, so that damage is caused reproducibly, by contrast with damage to the plain bearing by particles which is left to chance, and then the behaviour of the bearing or material is tested under stress.

2. Method according to claim 1, in which at least one groove with at least one embedded particle is formed.

3. Method according to claim 1 or 2, in which furthermore the dimensions of the groove, in particular length, width and/or cross-section, and/or the shape, size, number, weight and/or hardness of the particle are defined.

4. Method according to any of the preceding claims, wherein the counterpart of the plain bearing, preferably a shaft, is also prepared before testing in such a way that it is damaged.

5. Method according to any of claims 2 to 4, wherein the particle is embedded with force and/or displacement control, displacement being controlled preferably by means of a stop.

6. Method according to any of claims 2 to 5, wherein the particles comprise steel, copper or aluminium chips, corundum, blasting material from component cleaning, casting mould sand, casting flash or dirt from maintenance work, e.g. oil changing.

7. Method according to any of claims 2 to 6, wherein the remaining height by which an embedded particle projects, compared with the functional sliding plane of the plain bearing, is monitored and controlled.

8. Method according to any of the preceding claims, wherein preparation by rolling, stamping, subjecting to a laser, scratching, milling, turning, pressing, punching and/or denting by objects is carried out.

9. Method according to claim 8, wherein denting is carried out with a ball and/or a cone in a hardness testing apparatus at a given force and/or as rotary denting of a rotating or stationary disc.

10. Apparatus which is suitable for carrying out a method according to any of the preceding claims having:
- a device for testing the plain bearings and/or plain bearing materials under stress, wherein the bearing mounts a shaft which can be rotated in the bearing under stress and
- a device for preparing damage which can be reproduced in position and shape.

## Revendications

1. Procédé de détermination de la compatibilité à la saleté de paliers lisses ou de matériaux pour paliers lisses, dans lequel au moins une rainure comme il s'en produit à l'utilisation par l'effet de particules, est formée à un endroit défini, de sorte qu'un endommagement soit créé de façon reproductible, contrairement à un endommagement laissé au hasard du palier lisse par des particules, et ensuite, le comportement du palier ou du matériau sous de la charge est soumis à essai.

2. Procédé selon la revendication 1, dans lequel au moins une rainure avec au moins une particule encastrée est formée.

3. Procédé selon la revendication 1 ou 2, dans lequel en outre, la mesure de la rainure, en particulier la longueur, la largeur et/ou la section transversale, et/ou la forme, la taille, le nombre, le poids et/ou la dureté de la particule est définie.

4. Procédé selon l'une des revendications précédentes, dans lequel même l'élément opposé du palier lisse, un arbre de préférence, est préparé avant l'essai de façon telle qu'il soit endommagé.

5. Procédé selon l'une des revendications 2 à 4, dans lequel l'encastrement de la particule s'effectue avec un réglage de la force et/ou du tracé, le réglage du tracé s'effectuant de préférence par une butée.

6. Procédé selon l'une des revendications 2 à 5, dans lequel les particules présentent des copeaux d'acier, de cuivre, d'aluminium, du corindon, du matériau de sablage de nettoyage de composants, du sable de moule de coulée, des bavures de coulée ou des salissures de travaux de maintenance, comme par exemple du changement d'huile.

7. Procédé selon l'une des revendications 2 à 6, dans lequel la hauteur de dépassement restante d'une particule encastrée est contrôlée et commandée en comparaison avec le plan de glissement fonctionnel du palier lisse.

8. Procédé selon l'une des revendications précédentes, dans lequel la préparation a lieu par roulage, marquage, effet au laser, raclage, fraisage, tournage, compression, estampage et/ou enfoncement d'objets.

9. Procédé selon la revendication 8, dans lequel l'enfoncement est effectué avec une bille et/ou un cône dans un appareil d'essai de dureté sous une force définie et/ou en tant qu'enfoncement circulaire d'un disque rotatif ou fixe.

10. Dispositif qui est approprié pour exécuter un procédé selon l'une des revendications précédentes, comprenant :
- un dispositif pour tester les paliers lisses et/ou les matériaux de palier lisse sous de la charge, le palier supportant un arbre qui peut être tourné dans le palier sous de la charge et
- un dispositif pour la préparation d'endommagements à position et forme reproductibles.
